# EUROPEAN PATENT APPLICATION

(11) **EP 3 627 407 A1**
(43) Date of publication of application: **25.03.2020**
(21) Application number: 18195231.8
(22) Date of filing: 18.09.2018
(51) Int. Cl.: G06Q 10/06

(54) **DISTRIBUTED DATABASE**

(71) Applicant: Siemens Aktiengesellschaft, 80333 München (DE)
(72) Inventor: Fornander, Jerry, 61232 Finspang (SE); Graichen, Andreas, 60211 Norrköping (SE); Jetzfellner, Thomas, 85609 Aschheim (DE); Lindstam, Johan, SE-60371 Norrköping (SE); Sauer, Markus, 81739 München (DE); Sturm, Monika, 1190 Wien (AT)

(57) **Abstract**

The invention refers to a distributed database and a kit containing such distributed database and a data source. Furthermore, the invention refers to a method of monitoring a machine. Furthermore, it refers to the use of a distributed database to improve the utilization of a component of a machine.

## Description

The invention refers to a distributed database and a kit containing such distributed database and a data source. Furthermore, the invention refers to a method of monitoring a machine. Furthermore, it refers to the use of a distributed database to improve the utilization of a component of a machine.

Handling data becomes a growing problem of the industry as methods and devices using and providing data become more and more important and handling the data correctly decides the outcome. For example, semiautomatic or automatic manufacturing devices are widely used in industrial manufacturing and are continuously the topic of further developments. New methods of manufacturing like additive manufacturing provide great opportunities, however, simultaneously provide new challenges to transfer such methods from research topics to reliable and universal applicable manufacturing devices. The flexible production method not only requires great amounts of data, but also provides many information of a product produced that way that can be utilized at a later point if stored and used correctly.

Also utilizing existing machines like streaming engines can be optimized to a great amount based on data collected and analyzed correctly. As, for example, maintenance and down times greatly influence the benefit generated using the right strategy to operate such streaming engine maximizes the output to fit the current demand while keeping the wear of the components in mind. This provides the chance to greatly improve the benefits simply using assets at hand.

Also using available assets in a new way allows to create, for example, additional income. While classic industry focussed on using own manufacturing capacities to provide reliable products methods like additive manufacturing allow to produce high quality products for other companies even working in different fields in case it can be relied on the quality of such outsourced production. Especially a lack of trust, for example, based on lack of experience of some cooperative work still holds such new strategies back.

Therefore, there is a need to make better use of existing assets to improve the benefits. Furthermore, there is a need to make better use of data to improve cooperation and open up new opportunities.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to an aspect the invention refers to a distributed database containing a smart contract, wherein the distributed database is adapted to receive and store data from at least one associated data source collecting data regarding a component of a machine, wherein the distributed database is protected against manipulation. Using such distributed database providing such data collection from a data source containing detailed information regarding a component of a machine and at least one smart contract allows utilizing such data very beneficially. It is especially preferred that the data is transmitted from the data source automatically to the distributed database to be processed there. Herein, such automatic transmission refers to a process containing no manual amendment or selection of the data to be transmitted to the database. This allows to achieve a greatly increased possibility to cooperate in trustless situations. Also it allows to provide a possibility to specifically retrieve the information regarding the machine to, for example, provide a greatly improved service of a manufacturer of the machine without requiring access to the system of the customer being a sensitive topic. Also it, for example, allows to directly provide the customer with very specific suggestions to further improve the utilization of the machine based on the great experience of the manufacturer. This can result in a greatly increased revenue even in case the customer already has significant experience, as the manufacturer can, for example, provide optimized maintenance schedules talking into account detailed information of the specific component, complex models for simulation and big data collected over a whole fleet of machines.

Examples of such distributed databases being protected against manipulation are distributed ledgers like blockchains and peer-to-peer data bank systems. The protection of the distributed database against manipulation can be realized using methods and means as available to a person skilled in the art. For example, said distributed database can be realized as blockchain to ensure that older data of the blockchain contained in earlier blocks is not manipulated by comparing the connection between older and newer blocks of the blockchain. Furthermore, the distributed database can be realized as encrypted database allowing new data to be added and old data to be retrieved only by a trusted party. Furthermore, it can be a peer-to-peer network allowing only access of a specified persons and/or a correspondingly restricted access.

According to another aspect the present invention refers a kit containing an inventive distributed database and at least one data source, wherein the data source is adapted to collect data of a component of a machine, wherein the distributed database and the at least one data source are adapted to provide an data exchange between data source and distributed database being protected against manipulation. Such protected communication not only allows a cooperation even in a trustless situation. It also allows to provide a central data collection and processing in a specific distributed database, for example, handling the data for different fleets without the risk of data being lost to third parties.

According to another aspect the present invention refers a manufacturing device containing at least one data source of an inventive distributed database or an inventive kit.

According to another aspect the present invention refers a power plant element containing a data source of an inventive distributed database or an inventive kit.

According to another aspect the present invention refers a method of monitoring a machine using an inventive distributed database. Using such distributed database allows to provide a continuous monitoring of a component of a machine even in a trustless situation. Herein, the communication between the data source and the distributed database allows the collection of corresponding data without the interaction of the actual operator of the machine. This allows to prevent manipulation and a more efficient cooperation, as multiple parties can work together, data for optimizing the operation of the machine is directly provided without any unnecessary delay and the question whether provided data can be trusted or not is rendered moot. Last point preventing misunderstandings and distrust based on surprising events or surprising datasets.

According to another aspect the present invention refers a computer program product containing an inventive distributed database or with program commands to perform an inventive method.

According to another aspect the present invention refers a device for providing an inventive computer program product, wherein the device stores the distributed database or the computer program product and/or provides the distributed database or the computer program product for further use.

To simplify understanding of the present invention it is referred to the detailed description hereafter and the figures attached as well as their description. However, the invention is not to be understood being limited to the embodiments as disclosed in the detailed description as they represent embodiments providing additional benefits to solve specific problems or fulfilling specific needs. Also, the figure is to be understood being not limiting the scope of the present invention, but disclosing a preferred embodiment explaining the invention further.

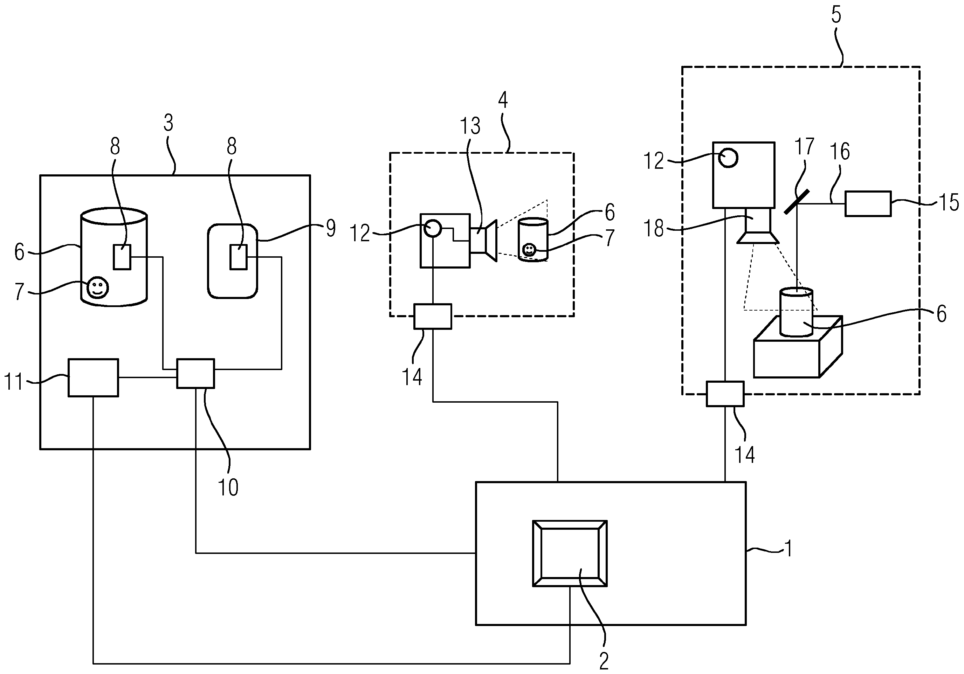

Fig. 1 shows a schematic drawing of an example of the inventive distributed database containing a smart contract and being connected to a machine containing the component, an analysis device and a manufacturing device.

The embodiments hereafter contain, unless specified otherwise, at least one processor and/or data storage unit to implement the inventive method.

The term "data storage" or comparable terms as used herein, for example, refer to a temporary data storage like RAM (Random Access Memory) or long term data storage like hard drives or data storage units like CDs, DVDs, USB sticks and the like.

According to an aspect the invention refers to a distributed database containing a smart contract, wherein the distributed database is adapted to receive and store data from at least one associated data source collecting data regarding a component of a machine, wherein the distributed database is protected against manipulation.

The term "distributed database" as used herein refers to a decentralized database like a blockchain, a distributed ledger, a distributed data storage system, a distributed ledger technology based system, a manipulation proof database, a cloud, a cloud service, a blockchain in a cloud or a peer-to-peer database. Herein, such distributed database can be a public database like a public blockchain or a non-public database like a private blockchain. Typically, it is preferred that such blockchain is non-public and can only be accessed by authorized persons. Herein, such access right might also be granted for external persons to allow a review of for example the production data of specific products.

The term "smart contract" as used herein especially includes data like program data or data being able to be executed by a program to perform specified steps or actions including control commands, specified values, requirements, interrelated data like measured values and corresponding action in response to fulfilling or not fulfilling predefined values in comparison to said measured values. For example, executing the smart contract can be done by a correspondingly selected distributed database or a runtime environment like a virtual machine. Preferably, such means for executing the smart contract are turing complete. Typically, it is preferred that the smart contract is executed using the infrastructure of the distributed database.

Such smart contract can be, for example, adapted to verify the fulfillment of requirements of the manufacturing process and/or product characteristics. For example, such product characteristics can be a predefined quality level like achieving predefined product dimension within specific tolerances. Furthermore, such requirements during the manufacturing process can be, for example, a non-interrupted additive manufacturing, the usage of a required temperature while melting substrate layers during 3D-printing or the generation of homogeneous layers during 3D-printing. However, according to the present invention it is especially preferred that such smart contract refers to the normal utilization of the component in the machine like a blade in a streaming engine. Herein, it allows to monitor the utilization and evaluate its use according to predefined conditions regarding, for example, maximum temperatures, acceleration processes, maintenance intervals to be complied with, and the like.

Herein, such smart contract can, for example, check, whether deviations are present from specified conditions being predefined to later amended when, for example, updating or amending a service contract. Such deviations can be compared by means of simple comparisons to a corresponding threshold. However, such deviations can also be evaluated using artificially intelligence analysis methods to analyze relevant parameters, correlate them to any found deviations and known deviations modes to identify cause, result and downstream effect.

Typically, it is preferred that the method is further adapted to differentiate between different intervals of the production to, for example, specify critical phases and noncritical phases of the production or usage. For example, such critical phases of the production process can be interruptions of the manufacturing process resulting in weaknesses of the product. For example, such critical phases during the usage of said component can be excessively increased operational load of the component like increased temperatures and accelerations of rotating parts in a streaming engine leading to significant dangers. Herein, failures to comply with specified conditions can also result in certain actions to be triggered by said smart contracts like warning signals, forwarding corresponding data to the party ordering the manufacturing the component or being responsible for the maintenance of said components, or even stopping a manufacturing process or utilization of said component to prevent corresponding damages. For example, it can result in a stop signal for a machine in case based on irregular use the safety of the machine or even the operators is endangered. Also it can monitor the continuous usage and in case of deviations from the planned use it can alert, for example, the operator to inform him on a required earlier maintenance to prevent a corresponding danger to arise and allow to early adapt the service intervals according the specific needs.

According to further embodiments the at least one data source preferably is located in additive manufacturing devices like 3D-printing devices and/or plants like power plants. In specific embodiments at least one data source being located in power plants is located in a streaming engine or a device connected to such streaming engine like a control device of such streaming engine. Typically, it is especially preferred that at least one data source is located in a streaming engine to provide specific data regarding a component being part of the streaming engine. For example, providing such data relating to the usage of a component like a blade allows to specifically tailor the required maintenance schedule according to the real needs and further decrease the downtimes.

According to further embodiments the distributed database preferably is adapted to monitor the use of the component. For example, it can monitor the usage of the component to detect violations of the service interval or the exceeding of the operational conditions. Herein, it becomes possible to provide a highly accustomed service for the specific product. It can take into account, for example, the specific production conditions and slight deviations noted in this context. For example, taking into account sensor data acquired during the production or measurement data acquired after the production it can adapt the service time according to the very specific later use and greatly increase the overall security during usage. Also it can automatically trigger a notification or even a turn off of a device containing said component, if specific requirements are met and, for example, the security of the device cannot be ensured because of deviations from the specified usage conditions.

According to further embodiments at least one data source preferably comprises at least one processing unit, wherein the at least one processing unit preferably is a hardware oracle like blockchain chip. Although, it is often satisfactory that one data source provides such processing unit it is typically preferred that at least two, more preferred at least three, data sources provide such processing unit. For example, providing multiple data sources located in a machine containing said component with such processing units provided the benefit that a greatly increased data security can be provided as, for example, the data collected by multiple data sources can be protected and allows to compare separately collected data being securely collected and transmitted. Providing such processing units in machine utilizing the component as well as the manufacturing device allows, for example, to provide a secure manufacturing by a third party still being supervised by means of the distributed database and collecting data to be used beneficially for the costumer. Simultaneously, the component is securely monitored in the machine making best use of the acquired data.

The term "processing unit" as used herein refers to data processing units as used for processing data. Herein, for example, checksums and cryptographic checksums are generated, smart contracts are executed, measured and predefined values are compared, a reaction to a specific situation a determined, an output is generated, a part of a data structure product is reconstructed, a checksum, preferably cryptographic checksum, is validated, new blocks for a blockchain are generated, new blocks are integrated in the blockchain, and so on. Such processing unit can, for example, be found in computers, clients, smart phones, and servers. For example, such processing unit can also be found in knots of the distributed database like a blockchain.

The term "cryptographic checksum" as used herein refers to a data checksum preferably acquired using a cryptographic hash function on the corresponding data or a part of the corresponding data. Furthermore, it can especially refer to a digital signature or a cryptographic authentication code adapted to be used to verify data used to generate the cryptographic checksum to protect against manipulation. Herein, such cryptographic checksum can, for example, be provided for each sensor data acquired or for the complete monitored data. Providing a multitude of cryptographic checksum typically provided a higher protection against manipulation. Providing such cryptographic checksum for, for example, a complete block to be included in the distributed database typically reduces the required workload for the processing unit, but decreases the data security at least slightly.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

According to further embodiments the data source preferably is connected to or part of a sensor collecting data of a machine like an additive manufacturing machine or a streaming engine. Such sensor can collect data acquired during the manufacturing process or during the usage of said component. For example, it can be sensor data relating to the temperature of the working conditions or data resulting from acceleration sensors monitoring the changes of the rotating speed of rotating elements inside a streaming engine. Additionally, it can, for example, refer to properties of the fuel or feed rates of cooling media used herein. Also it can, for example, include information regarding the temperature of the manufacturing environment, interruptions of the manufacturing process, unplanned openings of the manufacturing device, error messages, alarm messages, currents like the adjusted current applied to a laser included in the manufacturing device and comparable information.

According to further embodiments the distributed database preferably contains data regarding the manufacturing of a component received from a data source being part of or connected to an additive manufacturing device used to manufacture the component. This allows to, for example, directly acquire highly detailed data regarding the component that can be beneficially utilized for models or evaluations to, for example, optimize a maintenance schedule or operating data.

According to further embodiments the distributed database preferably contains data regarding the manufacturing of a component, and wherein the distributed database is connected to a data source being connected to or part of a machine containing the component. This allows to, for example, monitor the usage of the component in real time to immediately react to a specific situation. For example, an excessive stress of the component can be taken into account to shorten the time to the next maintenance to prevent endangering the machine and even the operators of the machine.

According to further embodiments the distributed database preferably contains data regarding the manufacturing of a component received from a data source being part of or connected to an additive manufacturing device used to manufacture the component, and wherein the distributed database is connected to a data source being connected to or part of a machine containing the component. Herein, such connection between the distributed database and data source does not necessarily have to be consistent. Unless explicitly specified otherwise herein, such connection in the sense of the present invention can be consistent or temporarily. Such temporary connection between such elements can be based on an irregular basis like when the corresponding device containing the data source is working or regular like based on a time scheme providing corresponding data on a regular basis. This allows, for example, using such detailed data regarding the manufacturing process of the specific component to optimize its later utilization in a machine.

According to further embodiments the distributed database preferably contains at least one unique identifier of a component of a machine being connected to the distributed database. This seems to be especially useful in a trustless situation when common standards have to be used to ensure reliable data. Herein, such unique identifier allows to increase the efficiency of the cooperation. Noting such unique identifier enables a later party to review the corresponding data, note a change of the corresponding device or mix-ups easily resulting in controversies and a raise if mistrust. Also it allows to more simply process data acquired over long term as mixing up data from different machines can be avoided resulting from, for example, replacements over the year. It was noted that such simple routine replacements of, for example, manufacturing devices easily result in systematic deviations rendering the later processing of corresponding data difficult or even impossible.

According to further embodiments the distributed database preferably contains maintenance data and/or operating data of a component. This, for example, allows to easily retrieve corresponding data. For example, a system can be provided to simultaneously download the required data from the distributed database when first exchanging data between the machine or its controls and the distributed database. Furthermore, it allows to easily update corresponding data to adapt, for example, the operating conditions to a new planned maintenance schedule after changing the planned usage of the machine. This is, for example, especially beneficial in case an existing streaming engine formerly used for continuously providing electric power is switched to a usage providing additional electrical power during peak times or in case renewable electrical power sources stop working based on, for example, a lack of sun or wind.

According to further embodiments the smart contract preferably is adapted to trigger an action based on data provided by the data source. For example, such action can by a signal for the operator of a device containing a data source signaling that the operating conditions of the component contained in the machine and being monitored is operated at incorrect conditions. Also such action can be used to automatically trigger a repair or maintenance based on corresponding data. Such arrangement is very beneficial, as it, for example, allows to further increases the possibilities of service provided to a costumer using such machine. Also it allows providing a double check by different instances to prevent even dangerous situation resulting from an incorrect evaluation of an unplanned change.

According to further embodiments the action preferably includes triggering an examination, repair or maintenance action. Such examination, repair or maintenance action can be performed by a repair crew being sent out or an automatic repair unit like a robot than can also be located at the facility containing the machine. This allows to immediately take action in case an urgent case arises. Also this allows to directly collect additional information regarding the specific case to verify corresponding data before, for example, forcefully shutting down the machine in case of threatening conditions.

According to further embodiments such distributed database preferably provides a further encryption dividing the data contained therein into subsections. This allows providing access to specific data for specific persons. It was noted that such method is very beneficial, for example, in case a costumer is granted the right to review the production data of a specific product, while the data regarding other products contained in the distributed database is to be kept secret. Alternatively or additionally the distributed database can be split into at least two sub databases, wherein these sub databases are split up according to, for example, different costumers, an official part and an unofficial part, or the like. For example, such official part can contain the sensor data of different layers of a product produced using additive manufacturing and the construction data of said product. While the inofficial part may contain the specific working conditions of an additive manufacturing device based on the construction data provided by a costumer and the internal know how to realize such structure.

According to further embodiments the component preferably is a part of a streaming engine like a blade, vane, heat shield, burner or part of the burner. It was noted that such highly stressed and sophisticated components benefitted significantly from using such improved data usage. Especially, providing such connecting distributed database making use of data like manufacturing data providing improved solutions for a costumer is very beneficial.

According to further embodiments the distributed database preferably is adapted to encrypt and decrypt data exchange between the data source and the distributed database. It was noted that utilizing such distributed database was especially beneficial, as it allows a simple data transmission using common data connections without risking that a third party gains access to confidential data.

According to further embodiments the distributed database preferably stores a cryptographic checksum and/or an unique identifier of the data source along the collected data. It was noted that this typically is beneficial, as, for example, such additional data can be used to verify data later and/or allows to doubtless assign collected data to a corresponding data source.

According to further embodiments the distributed database preferably is adapted to process the data received by the data source based on optionally included priority data attached to or provided along the data of the data source. For example, security relevant data or data concerning possibly safety relevant situations can be given a corresponding priority data to be processed with higher urgency to allow a faster reaction of highly relevant data. For example, if monitored data with high priority should be stored in the distributed database system, the difficulty of a cryptographic puzzle is adapted to speed up the validation and storing process. This, for example, can be beneficial in cases where the sensor data indicate an event (e.g., a malfunction of a/the manufacturing device) which needs preferably taken care of as fast as possible. Additionally or alternatively the distributed database system adjusts the transmission speed of the monitored data within the network of nodes of the distributed database system based on the priority. This, for example, can be beneficial in cases where the monitored data needs to be rapidly transmitted to a specific node of the distributed database system. The specific node is, for example, a specific processing node for high priority sensor data/monitored data which is capable to shut down the manufacturing device and/or manufacturing process to avoid damage of the manufactured product or the manufacturing device/system.

According to further embodiments the distributed database preferably contains a blockchain or distributed ledger. It was noted that for typical embodiments such examples of databases provided a very beneficial combinations of data security and storage capabilities.

According to further embodiments the distributed database preferably is adapted to receive and store data from at least two, more preferred at least four, even more preferred at least ten, associated data sources. While collecting the data from a single data source already provides many benefits for typical embodiments combining the data originating from multiple data sources allows to, for example, provide a more detailed inside in the usage of the component

According to further embodiments at least two associated data sources preferably are located in different machines like different streaming engines. Such arrangement provided the benefit that, for example, in case of similar machines comparable data is collected and can be used to more easily identify deviations from expected behavior.

According to another aspect the present invention refers a kit containing an inventive distributed database and a data source, wherein the data source is adapted to collect data of a component of a machine, wherein the distributed database and the data source are adapted to provide a data exchange between data source and distributed database being protected against manipulation.

According to further embodiments the data source preferably is adapted to directly store the collected data in the distributed database. For example, the data source can comprise a processing unit adapted to directly generate blocks to be stored in a blockchain. This allows to further decrease the risk of a manipulation of the data being collected by the data source.

According to another aspect the present invention refers a manufacturing device containing a data source of an inventive kit.

According to further embodiments the manufacturing device preferably is an additive manufacturing device, more preferred a 3D-printing device. For example, such 3D-printing device can be a device using selective laser melting, selective laser sintering, electron beam melting or binder jetting.

According to further embodiments the manufacturing device preferably contains a data prioritization unit adapted calculate a priority based on collected data, and wherein the priority is stored in the collected data or along the collected data. This, for example, can be used to prioritize the processing of the collected data by the distributed database. It was noted that this can be beneficially used for a manufacturing device to directly react to certain situations. For example, in case the process is interrupted leading to a grave damage of the component the manufacturing process can directly be stopped to avoid unnecessary costs.

According to another aspect the present invention refers a power plant element containing a data source of an inventive kit.

According to further embodiments the power plant element preferably is a streaming engine like a steam turbine or gas turbine. It was noted that acquiring the data relating to such machines were especially beneficially used to optimize, for example, the maintenance schedule of the streaming engines. Especially, the possibility to increase the interval between the maintenances using such data provides a significant benefit increases, for example, the revenue of such machines.

According to further embodiments the power plant preferably contains a data prioritization unit adapted calculate a priority based on collected data, and wherein the priority is stored in the collected data or along the collected data. This allows to trigger an immediate reaction to a specific reaction to, for example, instruct a minor repair before a damage occurs.

According to further embodiments the data source preferably is located in or connected to a data collection unit adapted to collect data of a component located in the fluid stream part of the streaming engine. For example, such component can be blade or vane being adapted to be utilized while being essentially surrounded by the fluid stream or a heat shield being adapted to enclose the fluid stream or a burner or part of a burner being adapted to generate at least a part of the fluid stream. It was noted that collecting data regarding such components was typically especially beneficial, as, for example, such components allow a good assessment of the status of the machine and to adapt the maintenance schedule with high precision.

According to further embodiments the manufacturing device and/or the power plant element preferably contains a data storage to at least temporarily store the collected data. This prevents a data loss, for example, if the connection between the data source and the distributed database is interrupted. In such case the collected data can be buffered onto such data storage until the connection is reestablished. This is also beneficial in case the connection between the data source and the distributed database is, for example, only on a regular basis.

According to further embodiments the data source preferably is integrated in a component of the manufacturing device and/or the power plant element, wherein the data source is protected against manipulation. For example, such protection can be achieved using a secured encasing of the data source. For example, such security encasing can provide a mechanism rendering an encryption device hardware defective upon trying to open the security encasing.

According to another aspect the present invention refers a method of monitoring a machine using an inventive distributed database. Using such distributed database allows to provide a continuous monitoring of a component of a machine even in a trustless situation. Herein, the communication between the data source and the distributed database allows collecting corresponding data without the interaction of the actual operator of the machine. This allows preventing manipulation and a more efficient cooperation, as multiple parties can work together, data for optimizing the operation of the machine is directly provided without any unnecessary delay and the question whether provided data can be trusted or not is rendered moot. Last point preventing misunderstandings and distrust based on surprising events or surprising datasets.

According to further embodiments the method preferably contains agreeing on a defined condition of the machine to be maintained, wherein at least one associated data source, more preferred at least two associated data sources, even more preferred all associated data sources, collects data monitoring the compliance with the agreement. For example, such agreement can be specific manufacturing conditions to be maintained during the manufacturing of a component. For example, such agreement can refer to the operating conditions of a component of a machine like a streaming engine. Herein, the rotations speed, temperature or flow rate of the fluid stream, working hours or changes of the operating mode can, for example, be point of such agreement. This allows to, for example, provide a transparent process without unnecessary access to internal data of, for example, the customer while adapting an optimized service for minimal cost.

According to further embodiments the method preferably contains a financial transaction step based on the collected data. For example, a universal service contract of a streaming engine can be granted, wherein the costs are determined based on the stress applied to the streaming engine and the maintenance resulting therefrom. Also it can be used to trigger a direct payment to a manufacturer when the predefined manufacturing conditions have been met and the product leaves the manufacturing site. For example, such arrangement allows increasing the transparency of such contract and to simplify the conditions to be specified and negotiated simplifying the contracting process.

According to another aspect the present invention refers to a computer program product containing an inventive distributed database or with program commands to perform an inventive method.

According to another aspect the present invention refers a device for providing an inventive computer program product, wherein the device stores the distributed database or the computer program product and/or provides the distributed database or the computer program product for further use.

Fig. 1 shows a schematic drawing of an example of the inventive distributed database 1, wherein said distributed database 1 is protected against manipulation. For this reason a blockchain is selected as distributed database 1 to allow an easy introduction of new data from different parties while ensuring the data security of the data already contained in the distributed database 1. Based on the references of the blocks of the blockchain to each other it becomes possible to easily detect a manipulation of the blockchain.

Said distributed database 1 contains a smart contracts 2 being able to process the data originating from data sources received by and stored in the distributed database 1. Such data is, for example, generated by a sensor 8 contained in a machine 3 utilizing the component 6. The machine 3 as shown in figure 1 is a streaming engine, more specifically a gas turbine, containing blades as example of the component 6. These blades contain a sensor 8 representing a first data source providing data to be transmitted to the distributed database 1. Herein, the sensor 8 contained in the blade is connected to a hardware oracle by a data connection being protected against manipulation. Said hardware oracle being a blockchain chip allows to provide a manipulation free data source enabling, for example, to build up a data stock being point of review in case of malfunction that have to be clarified. Also a further component 9 of the machine 3 being a burner contains a sensor 8 representing a second data source to monitor the usage of the component 6 during its use. The sensor 8 of component 6 also contains such hardware oracle and directly transmits the protected data to further increase the data security of the acquired data. Herein, the data acquired by the different sensor 8 of the machine 3 as shown in the figure are interrelated and allow to not only more specifically monitor the usage of the component 6, but also to increase data security by correlating the data to each other. For example, comparing the usage profile of the burner with the temperature profile of the blade allows to detect a manipulation of the data stream by feeding simulated or copied data being provided to the data storage 10 as an endless loop. Also it allows to detect a malfunction of a sensor 8 based on irregular data received. Herein, such malfunction can maybe be even rectified simply by triggering a recalibration of the sensor 8 by a command originating from the distributed database 1. This allows to greatly increase the security of the operator as it prevents incorrect data to be used by the operator to incorrectly operate the machine 3.

The acquired data is at least temporarily stored along the data regarding the unique identifier 7 of the component 6 in a data storage 10 being part of the machine 3. Herein, said data can also be directly processed in said data storage 10 by a processing unit 12 being part of the data storage 10. Based on smart contracts 2 being downloaded and at least temporarily stored on the data storage 10 an action can be triggered like a data exchange, or transmitting a signal or a command to the controls 11 of the machine 3. This allows to directly trigger a response to react to a specified situation even without waiting for the data to be processed by the distributed database 1. Such way dangerous situations like unexpected overuse of the component 6 resulting from extraordinary situations can be averted or the operator can at least be informed that such handling requires some immediate action.

Said acquired data is transmitted to the distributed database 1 either consistently during usage or at least regularly based on a predefined scheme. The smart contract 2 is adapted to review the data and analyze it whether, for example, an adaption of the service intervals is required. Also it reviews the usage of the component 6 and provides additional data to the controls 11 of the machine 3, if required.

Furthermore, the distributed database 1 is connected to an analysis device 4 being adapted to analysis the component 6 using an analysis unit 13, for example, after maintenance or during maintenance. This allows updating the data of said component 6 by measured data to replace theoretical data or to provide current data to monitor the wear of the component 6. Herein, the data acquired by the analysis unit 13 is processed by a processing unit 12 to provide a cryptographic checksum. Said data and its checksum are transmitted to the distributed database 1 through an interface 14 of the analysis device. Said interface contains a data storage 10 to at least temporarily store the acquired data. The interface 14 and its data storage 10 are connected to the distributed database 1 regularly to transmit the acquired data and store it in the distributed database 1.

Additionally, the distributed database 1 is connected to a manufacturing device 5 being a 3D-printing device using selective laser melting being adapted to manufacture the component 6. Herein, a laser 15 generates a beam 16 being directed onto a powder bed using a mirror to selective melt said powder layerwise. Building up layer by layer creates the 3-dimensional component 6.

Said 3D-printing device contains a data source being a detection unit 18 providing data with regard to the manufacturing process of the component 6. The data is transmitted to the distributed database 1 through an interface 14 to be stored in the distributed database 1. Herein, said data is not only used to monitor the manufacturing process. Furthermore, said data acquired during the manufacturing process is also used to adapt the models contained in the smart contract 2 to predict the behavior and wear of the component 6 during usage. Furthermore, unexpected stresses resulting from unplanned uses detected by sensors 8 in the machine 3 can be simulated and the maintenance plan can be adapted accordingly. In case such simulation indicates that a danger might result this can also trigger a notification or even an action being transmitted to the controls 11 of the machine 3 to directly interact and prevent the operator to endanger the machine 3 or operator working on the machine 3. Also it can provide a suggestion to perform an examination of specific parts of the machine 3 to ensure an extraordinary stress of the component 6 did not result in a damage requiring attention. Herein, minor requests of examination requests can also be collected to provide a check list during some regular tests.

The data exchange between the manufacturing device 5 and the distributed database 1 is encrypted to prevent a third party to acquire unauthorized access to data regarding the manufacturing process. This is especially beneficial in case of manufacturing by a third party on demand, wherein the manufacturing data contains strictly confidential data with regard to a highly advanced and optimized product. Protecting such data like for the sophisticated components of a streaming engine becomes especially important in case manufacturing methods like 3D-printing used in this context allows to easily copy such component 6 based on the manufacturing data.

The data provided by the manufacturing device 5 and the machine 3 are accompanied by priority data provided by the corresponding device. This allows to prioritize processing data in certain circumstances. For example, in case the sensor 8 of the manufacturing device 5 notes a situation leading to grave damages of the component 6 manufactured rendering it useless. In such case processing such data is beneficially processed with higher priority to preferably cancel the manufacturing process and avoid unnecessary costs. Also such priority can be beneficial for the utilization in the machine 3 to process corresponding data with high priority in case, for example, the data indicates that the current situation leads to grave problems or even dangers. For example, the operator can be immediately informed in case his current usage leads to a significant decrease of the maintenance intervals resulting in unplanned downtimes and additional costs.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Distributed database (1) containing a smart contract (2),
wherein the distributed database (1) is adapted to receive and store data from at least one associated data source collecting data regarding a component (6) of a machine (3),
wherein the distributed database (1) is protected against manipulation.

2. Distributed database (1) according to claim 1, wherein the at least one data source comprises at least one processing unit (12), wherein the at least one processing unit (12) preferably is a hardware oracle like a blockchain chip.

3. Distributed database (1) according to any of claims 1 to 2, wherein the at least one data source is connected to or part of a sensor (8) collecting data of a machine (3) like an additive manufacturing machine (3) or a streaming engine.

4. Distributed database (1) according to any of claims 1 to 3, wherein the distributed database (1) contains data regarding the manufacturing of a component (6) received from a data source being part of or connected to an additive manufacturing device (5) used to manufacture the component (6), or
wherein the distributed database (1) is connected to a data source being connected to or part of a machine (3) containing the component (6).

5. Distributed database (1) according to any of claims 1 to 4, wherein the distributed database (1) contains maintenance data and/or operating data of a component (6), wherein the data source provides data with regard to said component (6).

6. Distributed database (1) according to any of claims 1 to 5, wherein the smart contract (2) is adapted to trigger an action based on data provided by the data source, and wherein the action includes triggering an examination, repair or maintenance action or
wherein the distributed database (1) is adapted to process the data received by the data source based on optionally included priority data attached to or provided along the data of the data source.

7. Kit containing a distributed database (1) according to any of claims 1 to 6 and at least one data source, wherein the data source is adapted to collect data of a component (6) of a machine (3),
wherein the distributed database (1) and the at least one data source are adapted to provide an data exchange between data source and distributed database (1) being protected against manipulation.

8. Manufacturing device (5) containing a data source of a distributed database (1) according to any of claims 1 to 5 or a kit according to claim 7.

9. Manufacturing device (5) according to claim 8, wherein the manufacturing device (5) is an additive manufacturing device (5).

10. Power plant element containing a data source of a distributed database (1) according to any of claims 1 to 5 or a kit according to claim 7.

11. Method of monitoring a machine (3) using a distributed database (1) according to any of claims 1 to 6.

12. Method according to claim 11, wherein the method contains agreeing on a defined condition of the machine (3) to be maintained,
wherein at least one associated data source collects data monitoring the compliance with the agreement.

13. Method according to any of claims 11 to 12, wherein the method contains a financial transaction step based on the collected data.

14. Computer program product containing a distributed database (1) according to any of claims 1 to 6 or with program commands to perform a method according to any of claims 11 to 13.

15. Device for providing a computer program product according to claim 14, wherein the device stores the distributed database (1) or the computer program product and/or provides the distributed database (1) or the computer program product for further use.
